# EUROPÄISCHE PATENTSCHRIFT

(11) **EP 1 467 890 B1**
(45) Veröffentlichungstag und Bekanntmachung des Hinweises auf die Patenterteilung: **27.04.2005**
(21) Anmeldenummer: 03701539.3
(22) Anmeldetag: 23.01.2003
(51) Int. Cl.: B60Q 1/56

(54) **KONTAKTIERUNGSANORDNUNG FÜR EIN METALLSCHILD**
CONTACT SYSTEM FOR A METAL PLATE
SYSTEME A CONTACT D'UNE PLAQUE METALLIQUE

(30) Priorität: 23.01.2002 DE 20200927 U
(43) Veröffentlichungstag der Anmeldung: 20.10.2004
(73) Patentinhaber: FER Fahrzeugelektrik GmbH, 99819 Eisenach (DE)
(72) Erfinder: MOSER, Helmut, 76646 Bruchsal (DE)
(74) Vertreter: Strasser, Wolfgang
(86) Internationale Anmeldenummer: PCT/EP2003/000678
(87) Internationale Veröffentlichungsnummer: WO 2003/062014

(56) Entgegenhaltungen:
- WO-A-96/16391
- DE-A- 19 827 477
- DE-U- 29 911 348
- US-A- 3 680 237
- US-A- 5 542 200

## Beschreibung

Die Erfindung betrifft eine Kontaktierungsanordnung für ein Metallschild, insbesondere Kraftfahrzeug-Kennzeichenschild, auf dessen einer Flachseite eine Elektrolumineszenz-Leuchtanordnung ausgebildet ist.

Aus dem deutschen Gebrauchsmuster 299 11 348.5 ist eine vereinfachte Elektrolumineszenz-Anordnung bekannt, bei der ein Elektrolumineszenz-Flachkondensator dadurch auf zumindest einer Flachseite einer Metallplatte bzw. eines Metallschildes ausgebildet ist, daß auf diese Flachseite eine Isolationsschicht, auf dieser eine im Betrieb das Elektrolumineszenz-Leuchten abgebende Pigmentschicht und darüber eine transparente Deckelektrode aufgebracht sind, wobei die Metallplatte bzw. das Metallschild selbst unmittelbar als Basiselektrode Verwendung findet. Ein solches Metallschild kann nach dem Aufbringen der Elektrolumineszenz-Beschichtung beispielsweise durch Prägen und/oder Stanzen verformt werden, ohne daß dadurch die zuvor erzeugte homogene Leuchtfläche beeinträchtigt wird.

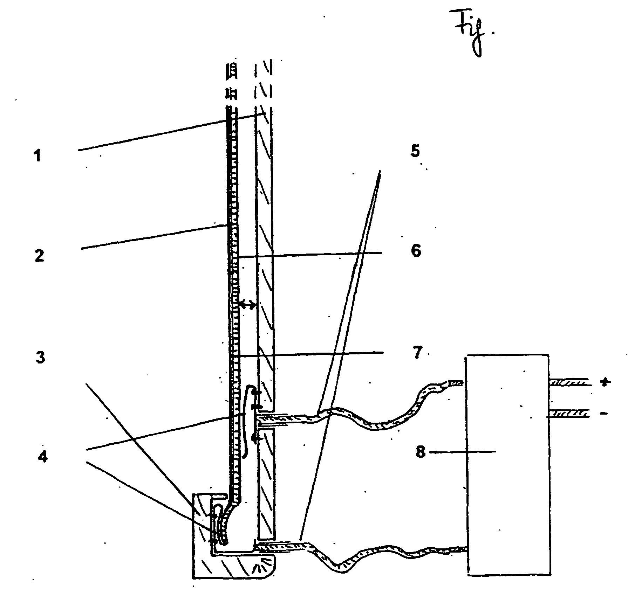

In der erwähnten Druckschrift sind die elektrischen Anschlußleitungen, die für das Anlegen einer Wechselspannung an den Elektrolumineszenz-Flachkondensator erforderlich sind, in der einzigen Figur zwar wiedergegeben, doch wird über ihre konkrete Ausgestaltung und Verbindung mit dem die Basiselektrode bildenden Metallschild bzw. der transparenten Deckelektrode nichts Konkretes ausgesagt.

Insbesondere dann, wenn solche einen Elektrolumineszenz-Flachkondensator tragende Metallschilder mit bereits existierenden Metallschildern ohne weiteres kompatibel und auf einfache Weise austauschbar sein sollen, wie dies beispielsweise bei Kraftfahrzeug-Kennzeichenschildem der Fall ist, kommen bekannte elektrische Kontaktierungsverfahren, wie z. B. Crimpen, Piercen, Nieten, Löten oder Kleben nicht in Frage.

Demgegenüber liegt der Erfindung die Aufgabe zugrunde, eine Kontaktierungsanordnung für ein Metallschild der eingangs genannten Art zu schaffen, bei der die Kompatibilität des Metallschildes mit bisher verwendeten, einfachen, das heißt keinen Elektrolumineszenz-Flachkondensator tragenden Metallsehildern erhalten bleibt und eine einfache Montierbarkeit und Austauschbarkeit gewährleistet sind.

Zur Lösung dieser Aufgabe sieht die Erfindung die im Anspruch 1 zusammengefaßten Merkmale vor.

Durch die erfindungsgemäße Kontaktierungsanordnung für einseitig eine Elektrolumineszenz-Leuchtanordnung tragende Metallschilder, die gleichzeitig auch als Träger bzw. Montagevorrichtung für das Metallschild dient, wird ein schnelles und wiederholbares Einsetzen bzw. Auswechseln des Metallschildes möglich. Mit Hilfe der Federkontakte im Bereich der Rückwand und im Bereich des Halterahmens erfahren die rückwärtige Seite des Metallschildes, das die Basiselektrode des oder der auf seiner vorderen Flachseite aufgebauten Flachkondensatoren bildet und die Deckelektrode (bzw. im Falle von mehreren unabhängig ansteuerbaren Flachkondensatoren: die mehreren Deckelektroden) beim Verbinden des Halterahmens mit der Rückwand automatisch eine sichere und dauerhafte elektrische Einspeisung.

Das Metallschild selbst hat keinerlei störende elektrische Kontaktfahnen oder Kabel, die bei seiner Herstellung oder bei einem anschließenden Verformen hinderlich wären, und bleibt somit voll kompatibel mit einfachen Metallschildem, die keine Elektrolumineszenz-Leuchtanordnung aufweisen und daher auch nicht kontaktiert werden müssen. Dies gilt auch in dem bevorzugten Fall, daß die Feder-Kontaktelemente im Bereich des Halterahmens nicht unmittelbar gegen die wenigstens eine Deckelektrode sondern gegen einen im Vergleich zu dieser dicken, elektrischen Leiter angedrückt werden, der seinerseits mit der transparenten, sehr dünnen Deckelektrode in elektrisch leitender Verbindung steht. Dieser "Anschlußkontakt" kann ohne weiteres bei der Herstellung des Metallschildes auf dessen Vorderseite aufgebracht werden, ohne daß die eben erwähnten Vorteile verlorengehen.

Wenn die durch eine erfindungsgemäße Kontaktierungsanordnung kontaktierten Metallschilder im Betrieb vertikal oder nahezu vertikal angeordnet sind, wie dies z. B. bei Kraftfahrzeug-Kennzeichenschildern der Fall ist, befinden sich die Feder-Kontaktelemente vorzugsweise im oberen Bereich der Rückwand bzw. des Halterahmens, um die Einwirkung von Feuchtigkeit so gering wie möglich zu halten und eine sichere elektrische Anbindung zu gewährleisten.

Diese und weitere vorteilhafte Ausgestaltungen einer erfindungsgemäßen Kontaktierungsanordnung sind in den Unteransprüchen niedergelegt.

Die Erfindung wird im folgenden anhand eines Ausführungsbeispiels unter Bezugnahme auf die Zeichnung beschrieben; in dieser zeigt die einzige Figur einen Vertikal-Teilschnitt durch ein stehend angeordnetes Metallschild, das auf seiner einen Flachseite einen Elektrolumineszenz-Flachkondensator trägt und mit einer erfindungsgemäßen Kontaktierungsanordnung ausgestattet ist.

Die in der Figur dargestellte, erfindungsgemäße Kontaktierungsanordnung umfaßt eine Rückwand 1 sowie einen sich um den Umfang dieser Rückwand 1 erstreckenden Halterahmen 3, der an der Rückwand 1 beispielsweise durch eine nicht gezeigte Rastverbindung befestigbar ist. Zwischen die Rückwand 1 und den Halterahmen 3 ist ein Metallschild 2 eingesetzt, das auf seiner von der Rückwand 1 abgewandten Vorderseite eine Elektrolumineszenz-Leuchtanordnung 7 trägt, die aus einer unmittelbar auf das Metallschild 2 aufgebrachten Isolationsschicht, einer diese überdeckenden Pigmentschicht und einer diese abdeckenden, sehr dünnen, transparenten, elektrisch leitenden Deckelektrode besteht. Diese Schichten sind nicht im einzelnen wiedergegeben, da ein solcher Elektrolumineszenz-Flachkondensator-Aufbau dem Fachmann ohne weiteres geläufig ist.

Der Halterahmen 3 besitzt einen im wesentlichen L-förmigen Querschnitt, wobei sich sein einer L-Schenkel in etwa parallel zur Rückwand 1 und im Abstand von dieser erstreckt. An der der Rückwand 1 zugewandten Innenseite dieses L-Schenkels des Halterahmens 3 und an der der Rückseite des Metallschildes 2 zugewandten Fläche der Rückwand 1 ist jeweils ein korrosionsbeständiges Feder-Kontaktelement 4, 4 befestigt, von denen das erstere vorzugsweise gegen einen an dieser Stelle vorgesehenen, im Vergleich zur Dicke der Deckelektrode dicken, elektrisch leitenden Kontaktfleck (nicht gesondert dargestellt) angedrückt wird, der seinerseits mit der Deckelektrode in elektrisch leitender Verbindung steht, während das zweite unmittelbar gegen die Rückseite 6 des Metallschildes 2 angedrückt wird. Die einander entgegengerichteten Federkräfte dieser beiden Feder-Kontaktelemente 4, 4 dienen neben der Herstellung eines guten elektrischen Kontaktes gleichzeitig zu einer sicheren, festen Halterung des Metallschildes 2 bezüglich der Kontaktierungsanordnung. Wie man sieht, ist jedes der Feder-Kontaktelemente 4, 4 mit einer Anschlußleitung 5, 5 verbunden, die zu einer Schalteinheit 8 führen, die zur Versorgung der Elektrolumineszenz-Leuchtanordnung 7 mit der erforderlichen Wechselspannung dient und ihrerseits beispielsweise mit dem Bordnetz eines Kraftfahrzeuges verbunden sein kann, was durch die weiterführenden Leitungen "+" und "-" angedeutet ist.

Statt der oben erwähnten Rastverbindung kann der ein- oder mehrteilig ausgebildete Halterahmen 4 auch über ein oder mehrere Gelenke mit der Rückwand 1 verbunden sein, so daß er zum Einsetzen beziehungsweise Herausnehmen des Metallschildes 2 nach vorne abgeklappt werden kann.

Die Feder-Kontaktelemente 4, 4 können an ihren freien Enden klauen- oder zackenförmige Spitzen besitzen, die sich zur Erzielung eines besonders guten elektrischen Kontaktes in die ihnen gegenüberliegenden Metallflächen eingraben.

Im Rahmen der Erfindung ist es auch möglich, sowohl zur Kontaktierung der Rückseite des Metallschildes 2 als auch der einen oder mehreren Deckelektroden auf der Vorderseite mehrere Feder-Kontaktelemente vorzusehen, die dann so über die Fläche des Metallschildes 2 verteilt angeordnet sind, daß sich für dieses eine gleichmäßige und sichere Halterung ergibt.

## Patentansprüche

1. Kontaktierungsanordnung für ein Metallschild (2), insbesondere Kraftfahrzeug-Kennzeichenschild, auf dessen einer Flachseite eine Elektrolumineszenz-Leuchtanordnung (7) ausgebildet ist, die wenigstens einen Flachkondensator mit einer Isolationsschicht, einer Pigmentschicht und einer transparenten Deckelektrode umfaßt, **dadurch gekennzeichnet,**
**daß** die Kontaktierungsanordnung eine Halterung für das Metallschild (2) mit einer Rückwand (1) und einem schmalen Halterahmen (3) umfaßt, wobei die Außenabmessungen der Rückwand (1) in etwa denen des Metallschildes (2) entsprechen und der Halterahmen (3) in lösbarer Weise mit der Rückwand (1) verbindbar ist, so daß das Metallschild (2) zwischen die Rückwand (1) und den Halterahmen (3) einsetzbar ist, und daß wenigstens zwei Feder-Kontaktelemente (4, 4) vorgesehen sind, die mit den Anschlußleitungen (5, 5) für die Stromzuführung zur Elektrolumineszenz-Leuchtanordnung (7) in elektrisch leitender Weise verbunden sind und von denen eines im Bereich der Rückwand (1) der Halterung so angeordnet ist, daß es im zusammengebauten Zustand zur Erzielung eines elektrischen Kontaktes gegen die Rückseite des Metallschildes (2) angedrückt wird, während das andere im Bereich des Halterahmens (3) so angeordnet ist, daß es im zusammengebauten Zustand zur Erzielung eines elektrischen Kontaktes für die Deckelektrode des wenigstens einen Flachkondensators gegen die Vorderseite des Metallschildes (2) angedrückt wird.

2. Kontaktierungsanordnung nach Anspruch 1, **dadurch gekennzeichnet, daß** bei einer im Betrieb im wesentlichen senkrechten Positionierung des Metallschildes (2) die Federkontakte im oberen Bereich der Rückwand (1) bzw. im oberen Bereich des Halterahmens (3) angeordnet sind.

3. Kontaktierungsanordnung nach Anspruch 1 oder 2, **dadurch gekennzeichnet, daß** die Rückwand (1) aus einem elektrisch nicht leitenden Material besteht und das wenigstens eine Feder-Kontaktelement (4) unmittelbar trägt.

4. Kontaktierungsanordnung nach einem der vorhergehenden Ansprüche, **dadurch gekennzeichnet, daß** der Halterahmen (3) aus einem elektrisch nicht leitenden Material besteht und das wenigstens eine Feder-Kontaktelement (4) unmittelbar trägt.

5. Kontaktierungsanordnung nach einem der vorhergehenden Ansprüche, **dadurch gekennzeichnet, daß** das Metallschild (2) im wesentlichen durch die einander entgegengerichteten Kräfte der Feder-Kontaktelemente (4, 4) gehalten wird, die einerseits im Bereich der Rückwand (1) der Halterung und andererseits im Bereich des Halterahmens (3) angeordnet sind.

6. Kontaktierungsanordnung nach einem der vorhergehenden Ansprüche, **dadurch gekennzeichnet, daß** sich der Halterahmen (3) im wesentlichen über den gesamten Umfang der Rückwand (1) erstreckt.

7. Kontaktierungsanordnung nach einem der vorhergehenden Ansprüche für ein Metallschild (2), das auf seiner einen Flachseite wenigstens zwei voneinander unabhängig ansteuerbare Flachkondensatoren trägt, **dadurch gekennzeichnet, daß** im Bereich des Halterahmens (3) mehrere Feder-Kontaktelemente (4, 4) vorgesehen sind, von denen wenigstens zwei mit voneinander unabhängigen Anschlußleitungen (5, 5) für die Ansteuerung der wenigstens zwei Flachkondensatoren elektrisch leitend verbunden sind und zur Erzielung eines elektrisch leitenden Kontakts für die Deckelektrode des jeweils zugehörigen Flachkondensators gegen die Vorderseite des Metallschildes (2) angedrückt werden.

8. Kontaktierungsanordnung nach einem der vorhergehenden Ansprüche, **dadurch gekennzeichnet, daß** im Bereich der Rückwand (1) der Halterung mehrere Feder-Kontaktelemente (4, 4) vorgesehen und über die Fläche der Rückwand (1) verteilt angeordnet sind, die alle mit einer gemeinsamen Anschlußleitung (5) verbunden sind.

9. Kontaktierungsanordnung nach einem der vorhergehenden Ansprüche, **dadurch gekennzeichnet, daß** wenigstens eines der im Bereich des Halterahmens (3) angeordneten Feder-Kontaktelemente (4, 4) gegen einen im Vergleich zur transparenten Deckelektrode eine große Dicke aufweisenden elektrischen Leiter angedrückt wird, der mit der zugehörigen transparenten Decketektrode in elektrisch leitender Verbindung steht.

10. Kontaktierungsanordnung nach Anspruch 9, **dadurch gekennzeichnet, daß** der im Vergleich zur transparenten Deckelektrode eine große Dicke aufweisende elektrische Leiter auf der Oberseite des Metallschildes (2) angebracht ist.

## Claims

1. A contacting arrangement for a metal plate (2), in particular a motor vehicle registration plate, on one flat side of which is provided an electroluminescence light arrangement (7) which includes at least one flat capacitor with an insulating layer, a pigment layer and a transparent cover electrode, **characterised in that**
the contacting arrangement has a holder for the metal plate (2) with a rear wall (1) and a narrow holding frame (3), wherein the outside dimensions of the rear wall (1) approximately correspond to those of the metal plate (2) and the holding frame (3) can be releasably connected to the rear wall (1) so that the metal plate (2) can be inserted between the rear wall (1) and the holding frame (3), and that there are provided at least two spring contact elements (4, 4) which are electrically conductively connected to the connecting lines (5, 5) for the current feed to the electroluminescence light arrangement (7) and of which one is arranged in the region of the rear wall (1) of the holder in such a way that in the assembled condition to achieve an electrical contact it is pressed against the rear side of the metal plate (2) while the other is arranged in the region of the holding frame (3) in such a way that in the assembled condition to achieve an electrical contact for the cover electrode of the at least one flat capacitor it is pressed against the front of the metal plate (2).

2. A contacting arrangement according to claim 1 **characterised in that** when the metal plate (2) is positioned substantially perpendicularly in operation the spring contacts are arranged in the upper region of the rear wall (1) and in the upper region of the holding frame (3) respectively.

3. A contacting arrangement according to claim 1 or claim 2 **characterised in that** the rear wall (1) comprises an electrically nonconductive material and directly carries the at least one spring contact element (4).

4. A contacting arrangement according to one of the preceding **characterised in that** the holding frame (3) comprises an electrically nonconductive material and directly carries the at least one spring contact element (4).

5. A contacting arrangement according to one of the preceding claims **characterised in that** the metal plate (2) is held substantially by the mutually oppositely directed forces of the spring contact elements (4, 4) which are arranged on the one hand in the region of the rear wall (1) of the holder and on the other hand in the region of the holding frame (3).

6. A contacting arrangement according to one of the preceding claims **characterised in that** the holding frame extends substantially over the entire periphery of the rear wall (1).

7. A contacting arrangement according to one of the preceding claims for a metal plate (2) which on its one flat side carries at least two flat capacitors which are actuable independently of each other, **characterised in that** provided in the region of the holding frame (3) are a plurality of spring contact elements (4, 4) of which at least two are electrically conductively connected to mutually independent connecting lines (5, 5) for actuation of the at least two flat capacitors and to achieve an electrically conductive contact for the cover electrode of the respectively associated flat capacitor they are pressed against the front of the metal plate (2).

8. A contacting arrangement according to one of the preceding claims **characterised in that** a plurality of spring contact elements (4, 4) are provided in the region of the rear wall (1) of the holder and are arranged distributed over the surface of the rear wall (11), all being connected to a common connecting line (5).

9. A contacting arrangement according to one of the preceding claims **characterised in that** at least one of the spring contact elements (4, 4) arranged in the region of the holding frame (3) is pressed against an electrical conductor which is of a large thickness in comparison with the transparent cover electrode and which is in electrically conductive communication with the associated transparent cover electrode.

10. A contacting arrangement according to claim 9 **characterised in that** the electrical conductor which is of a large thickness in comparison with the transparent cover electrode is mounted on the top side of the metal plate (2).

## Revendications

1. Système à contact pour une plaque métallique (2), en particulier une plaque d'immatriculation de véhicule automobile, dont une face plane est formée avec un système de lumière électroluminescente (7), qui comprend au moins un condensateur plat ayant une couche d'isolant, une couche de pigment, et une électrode de recouvrement transparente, **caractérisée en ce que** le système à contact comprend une fixation pour la plaque métallique (2) ayant une paroi arrière (1) et un cadre de maintien étroit (3), les dimensions externes de la paroi arrière (1) correspondant environ à celles de la plaque métallique (2) et le cadre de maintien (3) est reliable de manière détachable à la paroi arrière (1) de telle sorte que la plaque métallique (2) est insérable entre la paroi arrière (1) et le cadre de maintien (3), et **en ce qu'**au moins deux éléments de contact à ressort (4, 4) sont prévus qui sont reliés de manière électriquement conductrice aux câbles de raccordement (5, 5) pour l'alimentation en courant du système de lumière électroluminescente (7) et dont un est disposé dans la zone de la paroi arrière (1) de la fixation de telle sorte s'il est pressé à l'état montée contre la face arrière de la plaque métallique (2) pour obtenir un contact électrique, alors que l'autre câble est disposé dans la zone du cadre de maintien (3) de telle sorte qu'il est pressé à l'état montée contre la face avant de la plaque métallique (2) pour obtenir un contact électrique pour l'électrode de recouvrement dudit au moins un condensateur plat.

2. Système à contact selon la revendication 1, **caractérisé en ce que** les contacts à ressorts sont disposés dans la zone supérieure de la paroi arrière (1), respectivement dans la zone supérieure du cadre de maintien (3), pour un positionnement sensiblement vertical de la plaque métallique (2) en fonctionnement.

3. Système à contact selon la revendication 1 ou 2, **caractérisée en ce que** la paroi arrière (1) est réalisée à partir d'un matériau électriquement non conducteur et supporte directement ledit au moins élément de contact à ressort (4).

4. Système à contact selon l'une des revendications précédentes, **caractérisé en ce que** le cadre de maintien (3) est réalisé à partir d'un matériau électriquement non conducteur et supporte directement ledit au moins un élément de contact à ressort (4).

5. Système à contact selon l'une quelconque des revendications précédentes, **caractérisé en ce que** la plaque métallique (2) est maintenue essentiellement par les forces antagonistes des éléments de contact à ressort (4, 4), qui sont disposés d'un côté dans la zone de la paroi arrière (1) de la fixation et de l'autre côté dans la zone du cadre de maintien (3).

6. Système à contact selon l'une quelconque des revendications précédentes, **caractérisé en ce que** le cadre de maintien (3) s'étend sensiblement sur la totalité de la périphérie de la paroi arrière (1).

7. Système à contact selon l'une quelconque des revendications précédentes, pour une plaque métallique (2), qui supporte sur une de ces faces planes au moins deux condensateurs plats commandables de manière indépendante, **caractérisé en ce qu'**il est prévu plusieurs éléments de contact à (4, 4) dans la zone du cadre de maintien (3) dont au moins deux sont reliées de manière électriquement conductrice avec des câbles de raccordement indépendants (5, 5) pour la commande desdits au moins deux condensateurs plats et qui sont pressés contre la face avant de la plaque métallique (2) pour obtenir un contact électriquement conducteur pour l'électrode de recouvrement du condensateur plat respectif.

8. Système à contact selon l'une quelconque des revendications précédentes, **caractérisé en ce qu'**il est prévu plusieurs éléments de contact à ressort (4, 4) dans la zone de la paroi arrière (1) de la fixation et qui sont répartis sur la surface de la paroi arrière (1) et qui sont tous reliés avec un câble de raccordement commun (5).

9. Système à contact selon l'une quelconque des revendications précédentes, **caractérisé en ce qu'**au moins un des éléments de contact à ressort (4, 4) disposés dans la zone du cadre de maintien (3) est pressé contre un conducteur électrique présentant une épaisseur importante comparée à l'électrode de recouvrement transparente, ledit conducteur électrique étant relié de manière électriquement conductrice à l'électrode de recouvrement transparente correspondante.

10. Système à contact selon la revendication 9, **caractérisé en ce que** le conducteur électrique qui présente une épaisseur importante par rapport à l'électrode de recouvrement transparente est montée sur le côté supérieur de la plaque métallique (2).
